# EUROPEAN PATENT APPLICATION

(11) **EP 2 487 632 A1**
(43) Date of publication of application: **15.08.2012**
(21) Application number: 11186995.4
(22) Date of filing: 27.10.2011
(51) Int. Cl.: G06Q 10/06

(54) **Intelligent data management methods and systems, and computer program products thereof**

(30) Priority: 11.02.2011 TW 100104519
(71) Applicant: Acer Incorporated, Taipei Hsien 221 (TW)
(72) Inventor: Lee, Yuah-Hsin, 221 Taipei Hsien (TW); Chen, Mei-Jung, 221 Taipei Hsien (TW); Ting, Kuei-Ping, 221 Taipei Hsien (TW)
(74) Representative: Michalski Hüttermann & Partner

(57) **Abstract**

Intelligent data management methods and systems are provided. Firstly, at least one event data is provided, wherein the event data at least includes identification data corresponding to at least one participant. Contact information corresponding to the participant is retrieved from a database according to the identification data corresponding to the participant. Then, a display interface is provided to simultaneously display the event data and the contact information corresponding to the participant. Then, an option interface is provided to select the contact information, wherein when the contact information is selected, a communication with participant is established based on the contact information.

## Description

### CROSS REFERENCE TO RELATED APPLICATIONS

This Application claims priority of Taiwan Patent Application No. 100104519, filed on Feb. 11, 2011, the entirety of which is incorporated by reference herein.

### BACKGROUND OF THE INVENTION

### Field of the Invention

The disclosure is related to intelligent data management systems and methods, and, more particularly to systems and methods that can connect to and display different application programs automatically.

### Description of the Related Art

In recent years, with the development of portable devices such as tablet computers, mobile phones, smart phones and Personal Digital Assistants (PDA), more and more functions in the portable devices are being offered. For example, portable devices may provide communication, e-mail, advanced address book management, calendar management, note-taking, and multimedia functions, and other kinds of functions and applications. As a result of the convenience of portable devices, the portable devices are now necessities of life for people.

Generally speaking, portable devices can execute many application programs and functions simultaneously; however, the application programs and functions are operated independently. For example, the calendar management and address book management programs both record partial information corresponding to a specific contact person; however, corresponding relationships therebetween are not automatically recorded. For example, when a user detects and manages the calendar of a portable device and wants to know the information corresponding to a specific contact person, the user must record the name of the specific contact person, open the address book management program, and manually search for the information corresponding to the specific contact person by the address book management program according to the recorded name. The above processing illustration is very complicated for the user.

### BRIEF SUMMARY OF THE INVENTION

Intelligent data management systems and methods are provided to overcome the above mentioned problems.

An embodiment of the invention provides an intelligent data management method for use in an electronic device. First, at least one event data is provided, wherein the event data at least comprises identification data corresponding to at least a participant, and contact information corresponding to the participant is retrieved from a database according to the identification data corresponding to the participant. A display interface is provided to simultaneously display the event data and the contact information corresponding to the participant. Then, an option interface is provided to select the contact information, wherein communication with the participant is established based on the contact information when the contact information is selected.

An embodiment of the invention provides an intelligent data management system for use in an electronic device at least comprising a display unit and a storage unit comprising a database and at least an event data, wherein the event data at least comprises an identification data corresponding to at least a participant. A process unit is used to retrieve contact information corresponding to the participant from the database according to the identification data corresponding to the participant, and then display the event data and the contact information corresponding to the participant by the display unit simultaneously.

In an embodiment of the invention provides an intelligent data management system for use in an electronic device comprising a storage unit comprising a database and at least one event data, wherein the event data at least comprises identification data corresponding to at least a participant, and a process unit is used to retrieve contact information corresponding to the participant from the database according to the identification data corresponding to the participant and provides an option interface to select the contact information, wherein when the contact information is selected, communication with the participant is established based on the contact information.

In an embodiment of the invention a computer program product loaded by a machine and executing an intelligent data management method is provided and comprises a first program code used to obtain at least one event data, wherein the event data at least comprises a participant and identification data, a second program code used to retrieve contact information corresponding to the participant from a database according to the identification data corresponding to the participant, and a third program code used to provide an option interface, wherein when an option of the option interface is selected, communication with the participant is established based on the contact information.

In an embodiment of the invention an intelligent data management method for use in an electronic device is provided, wherein at least one event data is obtained, wherein the event data at least comprises identification data corresponding to at least a participant. Contact information corresponding to the participant is retrieved from a database according to the identification data corresponding to the participant. Then, the event data and the contact information corresponding to the participant are displayed via a display unit simultaneously.

In an embodiment of the invention a computer program product loaded by a machine and executing an intelligent data management method is provided and comprises a first program code used to obtain at least one event data, wherein the event data at least comprises a participant and identification data, a second program code used to retrieve contact information corresponding to the participant from a database according to the identification data corresponding to the participant, and a third program used to display the event data and the contact information corresponding to the participant via a display unit simultaneously.

### BRIEF DESCRIPTION OF THE DRAWINGS

The invention will become more fully understood by referring to the following detailed description with reference to the accompanying drawings, wherein:

Fig. 1 is schematic diagram illustrating an intelligent data management system according to an embodiment of the invention;

Fig. 2 is a flowchart of an intelligent data management method according to an embodiment of the invention;

Fig. 3 is a flowchart of an intelligent data management method according to an embodiment of the invention;

Fig. 4 is a flowchart of an intelligent data management method according to an embodiment of the invention; and

Fig. 5 is a schematic diagram of an intelligent data management method of the invention.

### DETAILED DESCRIPTION OF THE INVENTION

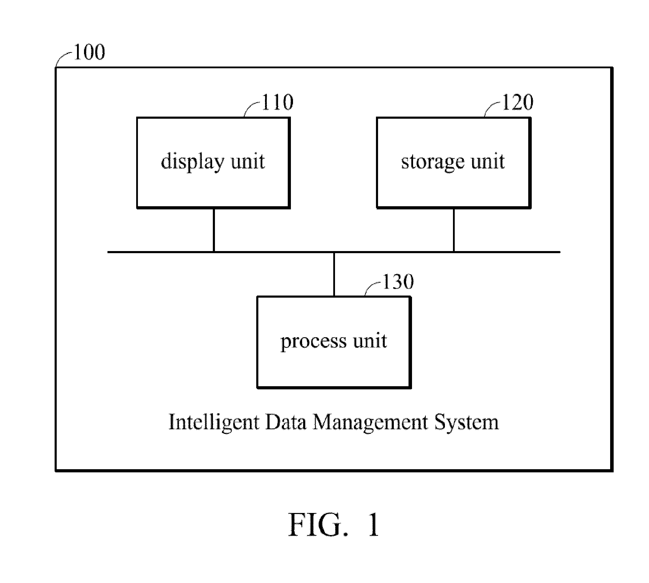

Fig. 1 is schematic diagram illustrating an intelligent data management system according to an embodiment of the invention. According to the embodiment, the intelligent data management system is configured to be applied in an electronic device such as a computer and portable device such as a tablet computer, Personal Digital Assistant (PDA), smart phone, mobile phone, mobile internet device, or notebook.

In this embodiment, the intelligent data management system 100 comprises a display unit 110, a storage unit 120, and a process unit 130. The display unit 110 can display related data such as figures, interface, and related contents. It is noted that in some embodiments, the display unit 110 can be a screen which is combined with a touch sensor device (not present). The touch sensor device has a touch interface comprising at least one dimension sensor, and the touch sensor device detects an input such as a touch and movement by finger or touch pen in the touch interface. The storage unit 120 is configured to store database and data which are provided for different application programs. The data in the storage unit 120 can also be provided to a display unit 110, and is displayed by the display unit 110. For example, when the intelligent data management system 100 comprises an address book management program, an address book database stored in the storage unit 120 can be provided to the address book management program. When the intelligent data management system 100 comprises a map/navigation management program, the map information in the storage unit 120 can be provided to the map/navigation management program. The process unit 130 is configured to execute the intelligent data management method of the invention, and the detailed contents are described as follows.

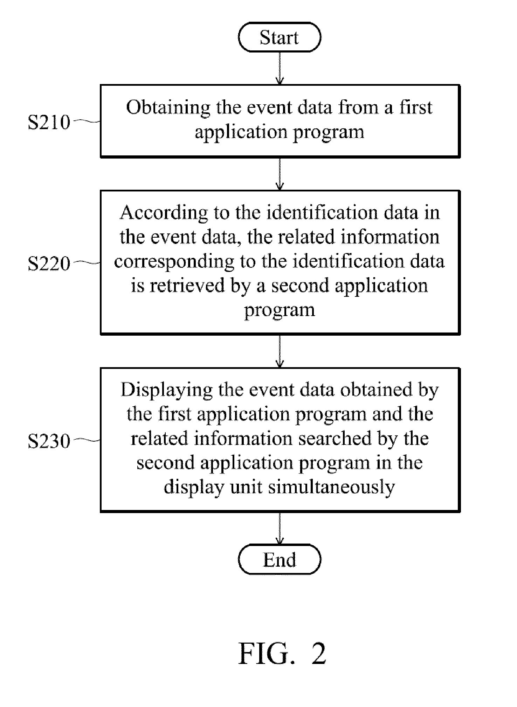

Fig. 2 is a flowchart of an intelligent data management method according to an embodiment of the invention. According to the embodiment, the intelligent data management method is configured to be applied in an electronic device such as a computer and portable device such as a tablet computer, Personal Digital Assistant (PDA), smart phone, mobile phone, mobile internet device, or notebook.

Firstly, in step S210, at least one event data is obtained from a first application program. It is noted that in some embodiments, all event data can comprise at least one identification data which is an event identification code of the event data or the data corresponding to a participant recorded in the event data . In step S220, the related information corresponding to the identification data is retrieved by a second application program according to the identification data in the event data. It is noted that in some embodiments, related information can comprise a note, a painting, a message and/or an e-mail. In step S230, the event data obtained by the first application program and the related information searched by the second application program is displayed in the display unit simultaneously.

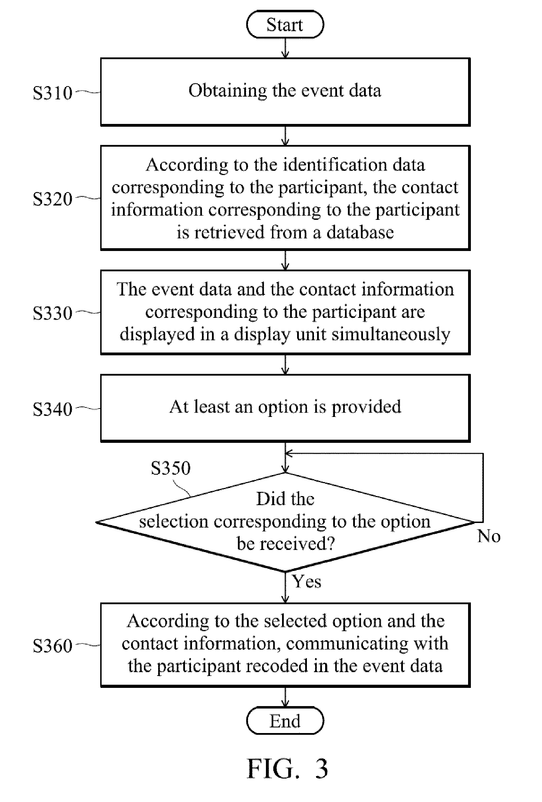

Fig. 3 is a flowchart of an intelligent data management method according to another embodiment of the invention. According to the embodiment, the intelligent data management method is configured to be applied in an electronic device such as a computer and portable device such as a tablet computer, Personal Digital Assistant (PDA), smart phone, mobile phone, mobile internet device, or notebook. In this embodiment, the event data will be associated with the contact information automatically.

In step S310, at least one event data is obtained. It is noted that in some embodiments, every event data can comprise an identification data corresponding to at least one participant, such as a name. In step S320, according to the identification data corresponding to the participant, the contact information corresponding to the participant is retrieved from a database. In step S330, the event data and the contact information corresponding to the participant are displayed in a display unit simultaneously. It is noted that in some embodiments, the event data can be obtained by a first application program such as the calendar management program, and the contact information corresponding to the participant can be obtained by a second application program such as the database of the address book management program. In step S340, at least an option is provided. It is noted that in some embodiments, the options can be displayed in the display unit. In step S350, a selection for at least one option is determined. When the selection corresponding to the option is not received (No in step S350), the determination of the step S350 is continued. When the selection corresponding to the option is received (Yes in step S350), in step S360, according to the selected option and the contact information, communicating with the participant recorded in the event data is performed. It is noted that in some embodiments, the types of communication with the participant can comprise a message, an e-mail, an instant message and/or voice communications.

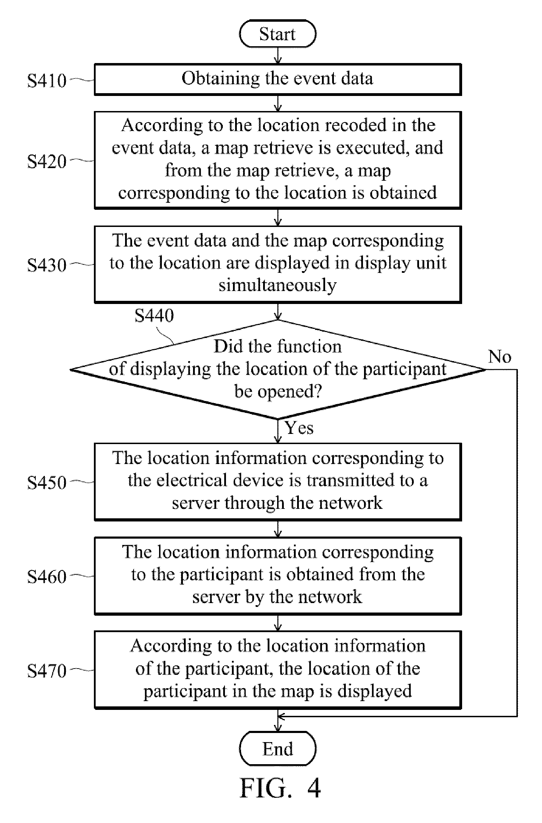

Fig. 4 is a flowchart of an intelligent data management method according to another embodiment of the invention. According to the embodiment, the intelligent data management method is configured to be applied in an electronic device such as a computer and portable device such as a tablet computer, Personal Digital Assistant (PDA), smart phone, mobile phone, mobile internet device, or notebook. In this embodiment, the event data and map information can connect automatically.

In step S410, at least one event data is obtained. It is noted that in some embodiments, every event data can be configured to record the location where the event happened. In step S420, according to the location recorded in the event data, a map retrieval is executed, and from the map retrieval, a map corresponding to the location is obtained. It is noted that in some embodiments, the map retrieval can be executed by connecting to a map service website through a network or executed in the electronic device directly. Then, in step S430, the event data and the map corresponding to the location are displayed in display unit simultaneously. It is noted that, the location in the map can be labeled in the map. Similarly, in some embodiments, event data can be obtained by a first application program such as the calendar management program, and the map corresponding to the location can be obtained by a second application program such as a map/navigation management program. It is noted that in some embodiments, at least one option can be provided for executing subsequent management and operation corresponding to the map. In step S440, a selection for at least one option is determined for opening the function of displaying the location of the participant. When the selection corresponding to opening the function of displaying the location of the participant has not been received (No in step S440), the process is stopped. When the selection corresponding to opening the function of displaying the location of the participant has been received (Yes in step S440), in step S450, the location information corresponding to the electronic device is obtained, and the location information corresponding to the electronic device is transmitted to a server through the network. It is noted that in some embodiments, the electronic device comprises an orientation device (not present) such as global positioning system (GPS). The location information of the electronic device can be known by the orientation device. In step S460, the location information corresponding to the participant recorded in the event data is obtained from the server by the network. In step S470, according to the location information of the participant, the location of the participant in the map is displayed in the display unit. Alternatively, the location information of the participant is labeled in the map.

It is noted that, in some embodiments, the intelligent data management method according to the invention provides a reminder function for the event data. As previously mentioned, the location information corresponding to event data recorded of a participant can be provided to the electronic device through the network by the server. In some embodiments, according to the information data corresponding to the participant and the location where the event was processed, the distance between the participant and the location can be calculated. Then, the time for transmitting a remind notification to the participant may be determined according to the distance between the participant and the location. For example, the remind notification can be transmitted to the participant for 10 minutes before the event date recorded in the event data, when the distance between the participant and the location is 10 km. The remind notification can be transmitted to the participant for 30 minutes before the event date recorded in the event data, when the distance between the participant and the location is 30 km. In addition, it is noted that in some embodiments, the remind notification can be transmitted to the participant for a predetermined time before the event date recorded in the event data, when the location information corresponding to the participant is not obtained by the server.

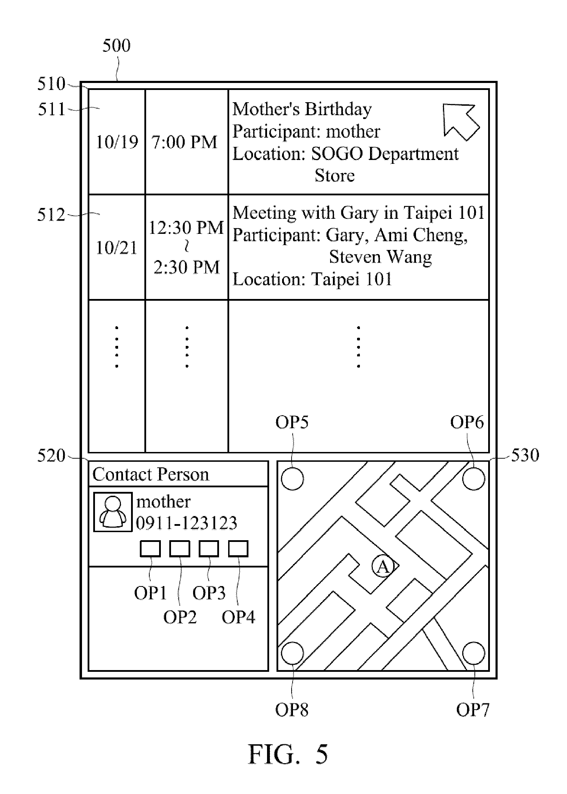

Fig. 5 is a schematic diagram of an embodiment of an intelligent data management method of the invention. The display unit 500 of the electronic device can be divided into an event data display area 510, a contact person display area 520, and a map display area 530. In the embodiment, two event data 511 and 512 are displayed in the event data display area 510. Note that the event data 511 and 512 can be obtained by the calendar management program, wherein at least the participant and the location corresponding to the event data are recorded for every event data. When the event data 511 is selected, according to the participant (mother) recorded in the event data 511, the contact information corresponding to the mother is retrieved by a calendar management program, and the contact information corresponding to the mother is displayed in a contact person display area 520. As previously mentioned, at least one option can be provided to execute subsequent management and operation for the retrieved data. In the embodiment, the options OP1, OP2, OP3, or OP4 can be displayed in the contact person display area 520. Every option can express the type of communications with the participant. When a user selects OP1, OP2, OP3 or OP4, according to the contact information of the participant, the electronic device can set up the communications with the participant by short message, e-mail, instant message or voice communications automatically. On the other hand, when the event data 511 is selected, according to the location (SOGO department store) recorded in the event data 511, a map retrieval is executed by the map/navigation management program or interconnection network, such that a map corresponding to the location is obtained, and the map is displayed in the map display area 530. The "A" in the map is the location (SOGO department store). Similarly, at least one option is provided to execute subsequent management and operation for the retrieved data. In the embodiment, the options OP5, OP6, OP7, and OP8 can be displayed in the map display area 530. Every option can be different functions. For example, when the user selects OP5, the electronic device can execute the navigation function for navigating to the location. When the user selects OP6, the electronic device can execute the reality surveyed function of the location. When the user selects OP7, the electronic device can execute the surrounding scenery near the location. When the user selects OP8, the location of the electronic device can be uploaded to a server, wherein the location information corresponding to the participant (mother) is obtained by the server, and the location information corresponding to the participant (mother) is labeled in the map.

Therefore, the relationships between the data of different application programs can be processed and displayed automatically by the intelligent data management method and system, and thereby the inconvenience of switching between different application programs is decreased. In addition, the complicated operations can be decreased and system resources may be saved.

Data display methods and systems, or certain aspects or portions thereof, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents.

## Claims

1. An intelligent data management method for use in an electronic device, comprising:
providing at least one event data, wherein the event data at least comprises identification data corresponding to at least a participant;
retrieving contact information corresponding to the participant from a database according to the identification data corresponding to the participant;
providing a display interface to simultaneously display the event data and the contact information corresponding to the participant; and
providing an option interface to select the contact information, wherein communication with the participant is established based on the contact information when the contact information is selected.

2. The intelligent data management method of claim 1, wherein the event data is obtained by a first application program, and the contact information corresponding to the participant is obtained from the database of a second application program.

3. The intelligent data management method of claim 1, wherein the communication established with the participant comprises a short message, an e-mail, an instant message, or voice communications.

4. The intelligent data management method of claim 1, wherein the event data comprises a location, and the method further comprise obtaining a map surrounding the location by executing a map retrieval corresponding to the location.

5. The intelligent data management method of claim 4, further comprising displaying the map and a position of the location which is in the map in a display unit.

6. The intelligent data management method of claim 5, further comprising:
obtaining a location information corresponding to the participant from a server via a network; and
displaying the location in the map corresponding to the participant in the display unit.

7. The intelligent data management method of claim 6, further comprising:
calculating a distance between the participant and the location according to the location information corresponding to the participant and the location; and
determining a time for transmitting a remind notification to the participant according to the distance between the participant and the location.

8. The intelligent data management method of claim 6, further comprising transmitting the remind notification to the participant for a predetermined time before the event date recorded in the event data when the location information corresponding to the participant is not obtained by the server.

9. The intelligent data management method of claim 6, further comprising:
obtaining the location information corresponding to the electronic device; and
transmitting the location information corresponding to the electronic device to the server via the network.

10. The intelligent data management method of claim 4, wherein the map retrieval is processed by connecting to a map service website via a network or processed in the electronic device directly.

11. The intelligent data management method of claim 2, wherein the event data includes an identification code, and the method further comprises obtaining related information corresponding to the event data from a third application program according to the identification code.

12. The intelligent data management method of claim 11, wherein the related information comprises a note, a painting, a message and an e-mail.

13. An intelligent data management system for use in an electronic device, at least comprising:
a display unit;
a storage unit comprising a database and at least one event data, wherein the event data at least comprises identification data corresponding to at least a participant; and
a process unit configured to retrieve contact information corresponding to the participant from the database according to the identification data corresponding to the participant, and then display the event data and the contact information corresponding to the participant by the display unit simultaneously.

14. An intelligent data management system for use in an electronic device, at least comprising:
a storage unit comprising a database and at least one event data, wherein the event data at least comprises identification data corresponding to at least a participant; and
a process unit is used to retrieve contact information corresponding to the participant from the database according to the identification data corresponding to the participant and provides an option interface to select the contact information, wherein when the contact information is selected, communication with the participant is established based on the contact information.

15. An intelligent data management method for use in an electronic device, at least comprising:
obtaining at least one event data, wherein the event data at least comprises identification data corresponding to at least a participant;
retrieving contact information corresponding to the participant from a database according to the identification data corresponding to the participant; and
displaying the event data and the contact information corresponding to the participant via a display unit simultaneously.
